# EUROPEAN PATENT SPECIFICATION

(11) **EP 2 994 571 B1**
(45) Date of publication and mention of the grant of the patent: **05.07.2017**
(21) Application number: 14733320.7
(22) Date of filing: 09.05.2014
(51) Int. Cl.: F24H 9/20, F26B 21/00, F26B 23/02, F23D 99/00, D21F 5/20, F24H 3/04, D21F 5/18

(54) **COMBUSTION SYSTEM AND METHOD FOR HEATING PROCESS AIR FOR PAPER DRYING SYSTEMS**
VERBRENNUNGSSYSTEM UND VERFAHREN ZUM ERWÄRMEN VON PROZESSLUFT FÜR PAPIERTROCKNERSYSTEME
SYSTÈME ET PROCÉDÉ DE COMBUSTION POUR CHAUFFER L'AIR DE TRAITEMENT POUR DES SYSTÈMES DE SÉCHAGE DE PAPIER

(30) Priority: 10.05.2013 IT MI20130775
(43) Date of publication of application: 16.03.2016
(73) Proprietor: Novimpianti Drying Technology S.r.l., 55014 Marlia-Capannori (LU) (IT)
(72) Inventor: SACCOMANO, Pietro, I-55100 Lucca (IT); GIANNECCHINI, Massimo, I-55100 Palmata (LU) (IT)
(74) Representative: Ottazzo, Marco Francesco Agostino
(86) International application number: PCT/IB2014/061330
(87) International publication number: WO 2014/181305

(56) References cited:
- EP-A1- 2 298 988
- GB-A- 1 034 213
- US-A- 2 985 438

## Description

The present invention refers to a combustion system and to a method for heating the process air for a system for drying paper, in particular but not exclusively, for a system for producing rolls of toilet paper.

As known, in the process of making paper in general, and in particular in that of toilet paper, it is necessary to carry out a step of drying of the product being processed through evaporation, so as to extract the excess water content. The product that must be dried, normally made up of a mixture of paper that is diluted with water, is prepared and conveyed to a drying and desiccation system after a preliminary pressing step. When the sheet of paper being processed is introduced into the drying and desiccating system, it has a low content of solid part, equal to around 35%-40% at a temperature of around 35°C. In other words, after the pressing step the sheet of paper being processed can still contain up to 65% water. The pressing step, therefore, is not capable of eliminating all of the water from the paper fibres, which must thus be removed through evaporation.

The end product, typically but not exclusively consisting of toilet paper, requires a content of solid part that is much greater than the values mentioned above. It is thus evident that there is a need of extracting from the sheet of paper, in the evaporation drying step, most of the residual water content thereof, so as to obtain a web-like paper sheet that is sufficiently dry. After the evaporation drying and desiccation step, the sheet of paper is arranged in reels so as to be subsequently processed (so-called "converting" step) and finally packed for shipping and the final retail selling.

The continuous cycle of drying and desiccation of the paper through evaporation, like for example toilet paper, is obtained with a system that is provided with two separate devices, which, however, act simultaneously on the sheet of paper during such a drying and desiccation step. A first drying device consists of a high performance hood, which provides for blowing hot air, at a temperature that can be greater than 700°C, on the sheet of paper being processed. The hot air is normally produced with a hot gas generator of the direct type. By direct type hot gas generator we commonly mean a hot gas generator in which the combustion develops directly in the flow of mass of fluid to be heated.

Simultaneously with respect to the blowing, the sheet of paper being processed is placed in contact with the surface of a steam heated cylinder, normally having a diameter that can be of between around 1.5 m and around 6 m. This cylinder, which is usually identified as a "Yankee" cylinder, is typically made up of a pressurised recipient containing, inside it, process steam of up to about 10 bar G and more.

For example, document EP 2 298 988 A1 to the same Applicant shows a system of the known type for drying paper according to the preamble of claim 1. Document GB 1 034 213 A, on the other hand, illustrates a particular embodiment of a hot gas generator that could be used in a similar system for drying paper.

In current continuous desiccation cycles, like in the case of toilet paper but not only, the high temperature moist air or "fumes", which is extracted from the sheet of paper being processed through the hood, is at least partially recycled. In other words, part of the desiccation air, together with the evaporated water, is sucked by a special fan so as to be reintroduced in the hot gas generator, where it is heated again to then be blown on the paper to be dried.

One part of the high temperature moist air that is extracted from the hood is on the other hand ejected into the atmosphere, so as to take away the mass of evaporated water. The ejection into the atmosphere further concerns the burnt gases coming out from the hot gas generator, and a certain amount of air coming from external infiltrations, which are unavoidable due to the fact that the drying and desiccation cycle is semi-open. This is where there is the main heat loss which reduces the performance of the drying and desiccation process.

Current hot gas generators of the direct type introduce, in the drying and desiccating system, in a ratio that is greater than the stoichiometric ratio, all the combustion air that is necessary for combustion, taking it from the atmosphere. Despite being able to be heated in special air/air heat exchangers, the combustion air remains at a relatively low temperature, thus leading to a heat loss and a combustion that is often incomplete.

It is also worth noting that in order to contain the temperature of the flame, which creates problems in terms of mechanical resistance to the piping material, and in terms of the formation of nitrogen oxides (NOₓ) which exceed the limits set by anti-pollution standards of the individual nations concerned, it is normal practice to increase the stoichiometric ratio until values are reached corresponding to the values of the Lambda index which are equal to 1.5-1.6 (with limit values of 2-3). This means that the amounts of combustion air that is introduced in the system can be from 50% to 300% too high.

The purpose of the present invention is therefore that of making a combustion system and a method for heating the process air for a system for drying paper, in particular but not exclusively for a system for making rolls of toilet paper, which is capable of solving the aforementioned drawbacks of the prior art in an extremely simple, cost-effective and particularly functional manner.

In detail, one purpose of the present invention is to make a combustion system for heating the process air for a system for drying paper that is capable of using both fuels of the conventional type, like for example natural gas or LPG, and fuels of different nature, in the form of gas or nebulised liquid.

Another purpose of the present invention is to make a combustion system and a method for heating process air for a system for drying paper that is capable of limiting the use of combustion air from the atmosphere, fully or partially drawn from the oxygen available in the process air. In such a way it is possible to reduce the mass of fumes extracted, increasing its titre (intended as grams of water by kilogram of dry air) and therefore substantially reducing heat losses at the chimney.

These purposes according to the present invention are achieved by making a combustion system and a method for heating the process air for a system for drying paper, in particular but not exclusively for a system for producing rolls of toilet paper, as outlined in the independent claims.

Further characteristics of the invention are highlighted by the dependent claims, which are an integrating part of the present description.

The characteristics and the advantages of a combustion system and of a method for heating the process air for a system for drying paper according to the present invention shall become clearer from the following description, given as an example and not for limiting purposes, with reference to the attached schematic drawings, in which:
figure 1 is a schematic view of a system for drying and desiccating paper provided with a combustion system for heating the process air according to the present invention; and
figure 2 is a schematic view of a preferred embodiment of a direct hot gas generator that can be used in the combustion system for heating the process air according to the present invention.

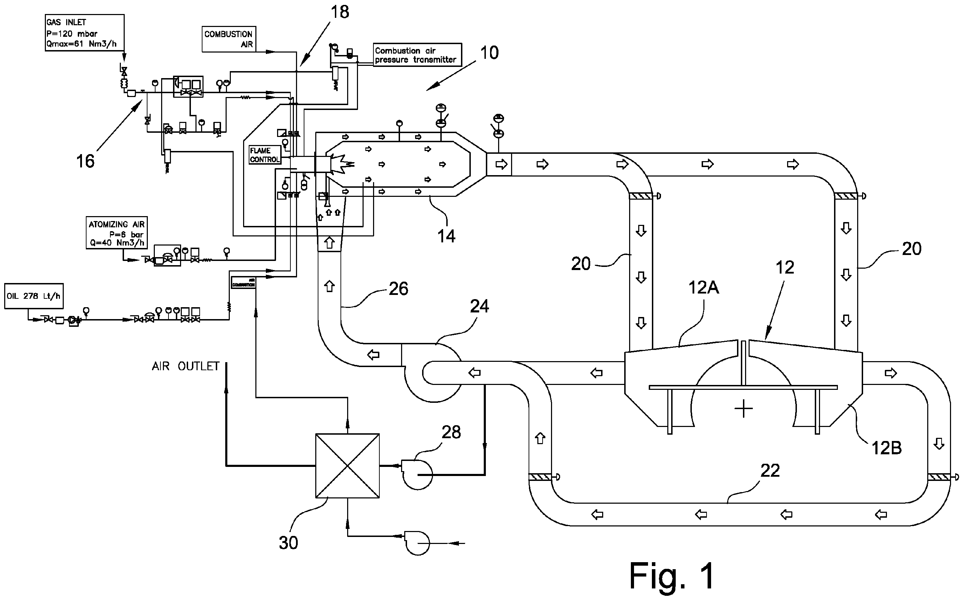

With reference in particular to figure 1, this schematically shows a system for drying and desiccating paper that is provided with a combustion system for heating the process air according to the present invention. The combustion system is wholly indicated with reference numeral 10.

The system for drying and desiccating paper comprises, in a per se known manner, a drying device 12 of the hood type that at least partially wraps around a cylinder that is heated with steam (Yankee cylinder, which is not shown). The hood 12 is capable of blowing high temperature dry air on a web-like paper sheet wrapped around the cylinder that is heated with steam, and of sucking the moist air or fumes, also at high temperature, that is released from the sheet of paper itself during its desiccation step. Typically, the dry air that is blown by the hood 12 has a temperature that can be greater than 700°C, whereas the moist air that is extracted from the sheet of paper has a temperature that can be greater than 450°C.

The high temperature dry air, that is blown from the hood 12, is produced by a hot gas generator 14 of the so-called direct type, which uses a fuel that is supplied through a corresponding system 16 for supplying fuel. The air that is drawn from the atmosphere is used as a combustion agent and is conveyed, through a corresponding system 18 for supplying combustion air, to the hot gas generator 14 itself.

The burnt air and gas mixture coming out from the hot gas generator 14 constitutes the dry drying and desiccation air, which is supplied under pressure to the hood 12 through one or more inlet conduits 20. As shown in figure 1, the hood 12 can preferably be made up of two separate semi-hoods 12A and 12B ("*dry*-*hood*" and *"wet-hood"*). Consequently, each semi-hood 12A or 12B can be provided with its own individual inlet conduit 20 for the dry drying and desiccating air.

The moist air high temperature that is extracted from the sheet of paper being processed through the hood 12, which is usually called process air, is on the other hand ejected through one or more outlet conduits 22 and is at least partially conveyed, by means of a recirculation fan 24 and by a relative recirculation conduit 26 that is connected to it, to the hot gas generator 14 so that it can be heated and reutilised by the hood 12 itself for drying the sheet of paper. Before being definitively ejected from the system, the remaining part of process air that is extracted from the hood 12 is finally conveyed, through the outlet conduits 22 and by means of an ejection fan 28, towards an air/air heat exchanger 30 (which is not always installed in the system), where it gives off part of its heat to the combustion atmospheric air that is conveyed to the hot gas generator 14 through the respective system 18 for supplying combustion air.

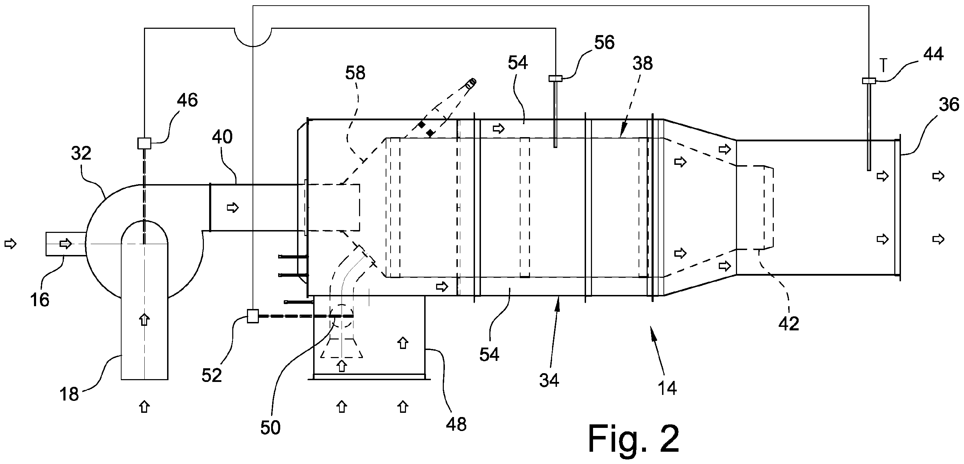

With reference now to figure 2, a preferred embodiment of the hot gas generator 14 shall now be shown. As previously mentioned, the hot gas generator 14 is of the so-called direct type, i.e. a hot gas generator in which the combustion develops directly in the flow of the mass of fluid to be heated. The direct hot gas generator 14 consists, in a per se known manner, of a burner 32 and of a combustion chamber 38, which is placed downstream of such a burner 32. The burner is provided with a valve 46 for controlling the supply of primary combustion air.

The combustion chamber 38 is preferably cylindrical-shaped and is provided with an outlet port 36 having a tapered and converging shape, i.e. with a decreasing diameter in the direction of the fluid flow with respect to the average diameter of the combustion chamber 38 itself. The outlet port 36 is thus placed in direct fluid communication with the inlet conduits 20 for the dry drying and desiccation air.

The combustion chamber 38 is manufactured with a refractory material and it is placed in direct fluid communication with the burner 32 by interposing a connection conduit 40, also manufactured with a refractory material. The combustion chamber 38 is substantially cylindrical-shaped, or is in any case compatible with the shape of a cooling channel 34 that encloses it, and it preferably extends in the same axial direction of extension of such a cooling channel 34.

As shown in figure 2, the combustion chamber 38 preferably has a length in the axial direction that is substantially greater than half of the length of the cooling channel 34, also measured in the axial direction. The combustion chamber 38 is moreover provided, at the front terminal end thereof, with a conveyor nozzle 42 with a converging section facing the outlet port 36 of the cooling channel 34. The combustion chamber 38 is configured so as to perform the function of containing the flame which develops through the connection conduit 40 of the burner 32 and so as to maintain the air and gas mixture inside it at a predefined temperature for a period of time that is required to complete the combustion process.

The process air that is conveyed by the recirculation conduit 26 is introduced in a port 48 that is placed in direct fluid communication with the cooling channel 34, and with the relative combustion chamber 38. The port 48 is provided with a corresponding valve 50 and with motor-driven actuation means 52 for actuating such a gate valve 50. The valve 50 is thus capable of controlling the amount of process air that is supplied in the hot gas generator 14, and of selectively deviating the flow of such a process air, which can thus be partially directly conveyed to the cooling channel 34 and partially to the relative combustion chamber 38 for the reasons that are explained in the rest of the description.

The cooling channel 34 is provided, at its outlet port 36, with at least one temperature sensor device 44 that is adapted to control the temperature of the air and burnt gases mixture that is produced by the hot gas generator 14 and that must be conveyed to the system for drying and desiccating paper through the respective inlet conduits 20. The temperature sensor device 44 is indeed capable of adjusting the mass of recirculation air to be introduced inside the combustion chamber 38 through the actuation of the motor-driven actuation means 52 of the valve 50. In such a way, by varying the mass of gas coming out from the conveyor nozzle 42, at a fixed high temperature (normally at 800°C and higher), it is possible to control the temperature of the blowing gases coming out, after being mixed, from the outlet port 36 of the cooling channel 34 and directed towards the hood 12.

With this adjustment system, by supplying more or less heat energy to the main flow of process air entering through the port 48, the mass of that part of mixture of air and burnt gases produced by the hot gas generator 14 that comes out, at high temperature, from the single combustion chamber 38 increases or decreases. The adjustment system also makes it possible, following the mixing between the combustion air entering the burner 32 through the respective system 18 for supplying combustion air (primary combustion air) and the process air that directly enters the combustion chamber 38 and/or the cooling channel 34 coming from the port 48, to set, to the required value, the final temperature of such a mixture of air and of burnt gases that are expelled from the outlet port 36 of the cooling channel 34. In any case, the process air that is introduced in the combustion chamber 38 through the valve 50 participates in the combustion process with its own amount of oxygen, making it possible to reduce the supply of cold external combustion air.

The residual flow rate of process air, which is not introduced inside the combustion chamber 38, is conveyed to the interspaces 54 formed between the outer walls of such a combustion chamber 38 and the inner walls of the cooling channel 34. This part of the process air is used to cool the walls of the combustion chamber 38 that would otherwise, despite being made of refractory stainless steel that can withstand high temperatures, could not withstand the heat load they are subjected to.

It is also worth observing that the rear terminal end 58, or "base", of the combustion chamber 38, which connects such a combustion chamber 38 with the connection conduit 40, is at least partially wrapped by the cooling channel 34. This configuration, which is illustrated in figure 2, makes it possible to improve the cooling capability of the walls of the rear terminal end 58 of the combustion chamber 38, which typically reaches temperatures that are rather high during the operation of the hot gas generator 14.

The particular configuration of the combustion chamber 38 of the hot gas generator 14 according to the present invention makes it possible to use fuels other than natural gas and from LPG, which to this day have been scarcely used for combustion systems for systems for drying and desiccating paper, whether in the gas form or in the liquid form.

Indeed, by using a dual-fuel burner 32 and with the provision of suitably increasing the combustion chamber 38 to a dimension such as to allow the fumes to reside for a period of time that is sufficiently high and in any case greater than a second, it is guaranteed for there to be the complete oxidation of all the organic parts in every load condition. In these conditions the combustion chamber 38 has a function that is similar to that of an incinerator. Consequently, the burnt air and gas mixture in outlet from the conveyor nozzle 42 is without unburned substances and has a low content of pollutants, like for example carbon monoxide (CO) and nitrogen oxides (NOₓ), as well as of solid organic particles.

Among the alternative fuels to natural gas and LPG it is also worth mentioning the so-called "low-grade" fuels, that are obtained for example from biomass, from municipal solid waste or from industrial waste. This capability of the burner 32 of being able to burn lower-grade fuels, that are an alternative to natural gas, thanks to the particular shape of the combustion chamber 38, controlled at high temperatures, and to the fumes residing for a time period that is sufficiently long and in any case greater than a second, allows the combustion chamber 38 to operate as an incinerator using multiple fuels with a wide range of heat values.

In the case in which alternative fuels are used with respect to natural gas and LPG, as previously indicated, it is provided for the heating of the combustion chamber 38 to occur with the help of natural gas or LPG. The heating occurs through the reading of a temperature probe 56, which is operatively connected to the combustion chamber 38, and the modulation of the burner 32 with the reaching of a set temperature, which is stabilised on values of between 800°C and 1100°C.

The method for heating the process air according to the present invention thus occurs in the following way. The combustion chamber 38 is maintained at a preset temperature (around 800°C-1100°C) whereas through the temperature sensor device 44, which acts upon the valve 50, the mass of gases in outlet from the conveyor nozzle 42 is adjusted and, consequently, the blowing temperature in the hood. It is therefore possible to make the heat load of the combustion system 10 suitable for the drying requirement of the system.

A first adjustment step, carried out on the burner 32, consists of adjusting the temperature to values such as to have the complete oxidation of the fuel inside the combustion chamber 38 and, consequently, the emission of a minimum amount of pollutants and of unburned substances. A second adjustment step consists of the controlled adjustment of process air inside the combustion chamber 38 (secondary combustion air) that is rich in oxygen in an amount that is large enough, following the heating in the combustion chamber 38 and of the mixing with the primary air combustion, so as to allow air to be conveyed at a preset temperature to the hood 12 of the system for drying paper.

It has thus been seen that the combustion system and the method for heating the process air for a system for drying paper according to the present invention achieve the purposes that were previously highlighted. In particular, concerning the containment of atmospheric pollution, it has been found that the difference with respect to known types of systems is the following:
- from typical values of around 40 ppm, carbon monoxide (CO) drops to values that are lower than 10 ppm;
- from typical values of around 80 ppm, nitrogen oxides (NOₓ) drops to values that are lower than 20 ppm;
- the stoichiometric ratio of the external combustion air, which is normally equal to around 1.5, can be reduced to values that are lower than 1.

Concerning the electrical part of the system, due to a smaller load loss in the combustion chamber, it is possible to obtain an energy saving equal to about 10%.

The combustion system and the method for heating the process air for a system for drying paper of the present invention thus conceived can in any case undergo numerous modifications and variants, all covered by the same inventive concept; moreover, all the details can be replaced by technically equivalent elements. In practice the materials used, as well as the shapes and dimensions, can be any according to the technical requirements.

The scope of protection of the invention is thus defined by the attached claims.

## Claims

1. System for drying a web-like paper sheet, the system comprising:
- at least one drying device (12) capable of blowing high temperature dry air, supplied under pressure through one or more inlet conduits (20), on the web-like paper sheet, and of sucking from said web-like paper sheet the moist air, ejected through one or more outlet conduits (22) connected to a recirculation conduit (26); and
- a combustion system (10) which comprises at least one hot gas generator (14) of the so-called direct type, provided with a system (16) for supplying fuel and a system (18) for supplying combustion air,
wherein the hot gas generator (14) consists of a burner (32), operatively connected to the system (16) for supplying fuel and to the system (18) for supplying combustion air, and a combustion chamber (38), the system being **characterised in that** said combustion chamber (38) is placed in direct fluid communication with the burner (32) by interposing a connection conduit (40), said combustion chamber (38) being configured to perform the function of containing the flame which develops through said connection conduit (40) and to maintain - therein - the air and gas mixture at a predefined temperature for a period of time required to complete the combustion process, wherein, outside the combustion chamber (38), at least one cooling channel (34) is provided which encloses said combustion chamber (38), said cooling channel (34) being placed downstream of said burner (32) and being operatively connected to the recirculation conduit (26), so that the hot gas generator (14) is capable of generating an air and burnt gases mixture which forms said dry air, as well as receiving, through said recirculation conduit (26), at least part of said moist air so that it can be heated and reutilised by the drying device (12), the hot gas generator (14) being moreover provided with a port (48) placed in direct fluid communication with the cooling channel (34), and with the combustion chamber (38), said port (48) being provided with a valve (50) capable of controlling the amount of recirculation air to be introduced into the combustion chamber (38), so that it takes part in the combustion process with its own amount of oxygen, and of conveying part of said recirculation air into the cooling channel (34), so that it is conveyed into the interspaces (54) formed between the outer walls of the combustion chamber (38) and the inner walls of the cooling channel (34), so as to cool said combustion chamber (38).

2. System according to claim 1, **characterised in that** the cooling channel (34) is provided with at least one temperature sensor device (44) adapted to control the temperature of the air and burnt gases mixture, said temperature sensor device (44) being capable of controlling motor-driven actuation means (52) of said valve (50) so that the temperature of the air mixture to be conveyed to the drying device (12) can be automatically adjusted according to preset values.

3. System according to claim 2, **characterised in that** the combustion chamber (38) is provided with a temperature probe (56) which, operating on the actuation of the burner (32), maintains a predefined temperature.

4. System according to any one of claims 1 to 3, **characterised in that** the cooling channel (34) is cylindrical-shaped and it is provided with an outlet port (36) having a tapered and converging shape, i.e. with a decreasing diameter in the direction of the fluid flow with respect to the average diameter of said cooling channel (34), said outlet port (36) being placed in direct fluid communication with said inlet conduits (20) for the dry air.

5. System according to claim 4, **characterised in that** the combustion chamber (38) is substantially cylindrical-shaped and it extends in the same axial direction of extension as the cooling channel (34).

6. System according to claim 5, **characterised in that** the combustion chamber (38) has a length in the axial direction substantially greater than half the length of the cooling channel (34), also measured in the axial direction.

7. System according to any one of claims 4 to 6, **characterised in that** the combustion chamber (38) is provided, at the front terminal end thereof, with a conveyor nozzle (42) with a converging section facing the outlet port (36) of the cooling channel (34).

8. System according to any one of the preceding claims, **characterised in that** the cooling channel (34) is configured so as to at least partially wrap around the rear terminal end or "base" (58) of the combustion chamber (38), which connects said combustion chamber (38) to the connection conduit (40), so as to improve the cooling capability of the walls of said rear terminal end or "base" (58) of the combustion chamber (38) .

9. System according to any one of the preceding claims, **characterised in that** both the combustion chamber (38), and the relative connection conduit (40) are made of a refractory material.

10. System according to any one of the preceding claims, further comprising an air/air heat exchanger (30) arranged at said outlet conduits (22) for the moist air, said air/air heat exchanger (30) recovering part of the heat of said moist air to transfer it to the combustion air conveyed to the hot gas generator (14) through the respective system (18) for supplying combustion air.

11. Method for heating the process air in a system for drying a web-like paper sheet according to any one of claims 1 to 10, the method being **characterised in that** it comprises the steps of:
- performing a modulating control of the temperature in the combustion chamber (38);
- performing a modulating control of the moist air flow rate in the combustion chamber (38) and the cooling channel (34) to guarantee the temperature required for the process air;
- adjusting the burner (32) temperature on such values as to allow the complete oxidation of the fuel in the combustion chamber (38) and the emission of a minimum amount of pollutants and of unburned substances; and
- adjusting the introduction in the combustion chamber (38) and the cooling channel (34) of an amount of recirculation air such as to allow conveying dry air at a preset temperature to the drying device (12).

12. Method according to claim 11, further comprising the step of maintaining the fuel inside the combustion chamber (38) for a period of time that is greater than a second, so that said combustion chamber (38) operates in a manner that is similar to that of an incinerator and in any case guaranteeing the complete oxidation of the fuel in said combustion chamber (38) and the emission of a minimum amount of pollutants and of unburned substances.

13. Method according to claim 11 or 12, wherein the fuel is selected from the group made up of:
- natural gas;
- LPG;
- fuels with a lower heat value than natural gas and LPG, obtained from biomass, from municipal solid waste or from industrial waste and supplied in the form of gas, and in the nebulised liquid form.

## Patentansprüche

1. System zum Trocknen eines bahnförmigen Papierbogens, wobei das System Folgendes umfasst:
- wenigstens eine Trocknervorrichtung (12), die in der Lage ist, trockene Heißluft, die unter Druck durch eine oder mehrere Einlassleitungen (20) eingespeist wird, auf den bahnförmigen Papierbogen zu blasen und die feuchte Luft von dem bahnförmigen Papierbogen anzusaugen, die durch eine oder mehrere, mit einer Rezirkulationsleitung (26) verbundene Auslassleitungen (22) ausgestoßen wird; und
- ein Verbrennungssystem (10), das wenigstens einen Heißgaserzeuger (14) vom sogenannten direkten Typ umfasst, der mit einem System (16) zur Brennstoffeinspeisung und einem System (18) zur Einspeisung von Verbrennungsluft versehen ist,
wobei der Heißgaserzeuger (14) aus einem Brenner (32) besteht, der mit dem System (16) zur Brennstoffeinspeisung und dem System (18) zur Einspeisung von Verbrennungsluft wirkverbunden ist, und aus einer Brennkammer (38), wobei das System **dadurch gekennzeichnet ist, dass** die Brennkammer (38) durch Einfügen einer Verbindungsleitung (40) in direkter fluidischer Verbindung mit dem Brenner (32) angeordnet ist, wobei die Brennkammer (38) ausgebildet ist, um die Funktion der Aufnahme der sich durch die Verbindungsleitung (40) entwickelnden Flamme und des Haltens des Luft-Gas-Gemischs hierin auf einer vordefinierten Temperatur für einen Zeitraum zu erfüllen, der zur Vervollständigung des Verbrennungsprozesses erforderlich ist, wobei außerhalb der Brennkammer (38) wenigstens ein Kühlkanal (34) vorgesehen ist, der die Brennkammer (38) einschließt, wobei der Kühlkanal (34) stromabwärts des Brenners (32) angeordnet und mit der Rezirkulationsleitung (26) wirkverbunden ist, so dass der Heißgaserzeuger (14) in der Lage ist, ein Gemisch aus Luft und verbrannten Gasen, welches die trockene Luft bildet, zu erzeugen und auch wenigstens einen Teil der feuchten Luft durch die Rezirkulationsleitung (26) zu empfangen, so dass sie erhitzt und von der Trocknervorrichtung (12) wiederverwendet werden kann, wobei der Heißgaserzeuger (14) ferner mit einer in fluidischer Verbindung mit dem Kühlkanal (34) stehenden Öffnung (48) und mit der Brennkammer (38) versehen ist, wobei die Öffnung (48) mit einem Ventil (50) versehen ist, das in der Lage ist, die Menge der in die Brennkammer (38) einzuführenden Rezirkulationsluft zu steuern, so dass sie mit ihrer eigenen Menge an Sauerstoff an dem Verbrennungsprozess beteiligt ist, und einen Teil der Rezirkulationsluft in den Kühlkanal (34) zu leiten, so dass sie in die zwischen den äußeren Wänden der Brennkammer (38) und den inneren Wänden des Kühlkanals (34) entstehenden Zwischenräume (54) geleitet wird, um die Brennkammer (38) zu kühlen.

2. System nach Anspruch 1, **dadurch gekennzeichnet, dass** der Kühlkanal (34) mit wenigstens einer Temperatursensorvorrichtung (44) versehen ist, die dazu geeignet ist, die Temperatur des Gemischs aus Luft und verbrannten Gasen zu steuern, wobei die Temperatursensorvorrichtung (44) in der Lage ist, motorbetriebene Betätigungsmittel (52) des Ventils (50) zu steuern, so dass die Temperatur des Luftgemischs, das zu der Trocknervorrichtung (12) geleitet werden soll, automatisch an voreingestellte Werte angepasst werden kann.

3. System nach Anspruch 2, **dadurch gekennzeichnet, dass** die Brennkammer (38) mit einem Temperaturmessfühler (56) versehen ist, der auf die Betätigung des Brenners (32) einwirkend eine vordefinierte Temperatur aufrecht erhält.

4. System nach einem der Ansprüche 1 bis 3, **dadurch gekennzeichnet, dass** der Kühlkanal (34) zylinderförmig und mit einer Auslassöffnung (36) mit einer sich verjüngenden, konvergierenden Form versehen ist, d.h. einen in Richtung Fluidstrom in Bezug auf den Durchschnittsdurchmesser des Kühlkanals (34) abnehmenden Durchmesser aufweist, wobei die Auslassöffnung (36) in direkter fluidischer Verbindung mit den Einlassleitungen (20) für die trockene Luft angeordnet ist.

5. System nach Anspruch 4, **dadurch gekennzeichnet, dass** die Brennkammer (38) im Wesentlichen zylinderförmig ist und sich in die gleiche axiale Ausdehnungsrichtung wie der Kühlkanal (34) erstreckt.

6. System nach Anspruch 5, **dadurch gekennzeichnet, dass** die Brennkammer (38) eine Länge in axialer Richtung aufweist, die im Wesentlichen größer als die halbe Länge des ebenfalls in axialer Richtung gemessenen Kühlkanals (34) ist.

7. System nach einem der Ansprüche 4 bis 6, **dadurch gekennzeichnet, dass** die Brennkammer (38) an ihrem vorderen Anschlussende mit einer Förderdüse (42) mit einem konvergierenden Bereich versehen ist, der gegenüber der Auslassöffnung (36) des Kühlkanals (34) angeordnet ist.

8. System nach einem der vorstehenden Ansprüche, **dadurch gekennzeichnet, dass** der Kühlkanal (34) entsprechend ausgebildet ist, um das hintere Anschlussende oder die "Basis" (58) der Brennkammer (38) wenigstens teilweise zu ummanteln, das die Brennkammer (38) mit der Verbindungsleitung (40) verbindet, um das Kühlvermögen der Wände des hinteren Anschlussendes oder der "Basis" (58) der Brennkammer (38) zu verbessern.

9. System nach einem der vorstehenden Ansprüche, **dadurch gekennzeichnet, dass** sowohl die Brennkammer (38) als auch die dazugehörige Verbindungsleitung (40) aus feuerfestem Material hergestellt sind.

10. System nach einem der vorstehenden Ansprüche, ferner umfassend einen Luft-Luft-Wärmetauscher (30), der an den Auslassleitungen (22) für die feuchte Luft angeordnet ist, wobei der Luft-Luft-Wärmetauscher (30) einen Teil der Wärme aus der feuchten Luft zurückgewinnt, um sie auf die Verbrennungsluft zu übertragen, die durch das jeweilige System (18) zur Einspeisung von Verbrennungsluft an den Heißgaserzeuger (14) geleitet wird.

11. Verfahren zum Erwärmen der Prozessluft in einem System zum Trocknen eines bahnförmigen Papierbogens nach einem der Ansprüche 1 bis 10, wobei das Verfahren **dadurch gekennzeichnet ist, dass** es folgende Schritte umfasst:
- Durchführen einer modulierenden Steuerung der Temperatur in der Brennkammer (38);
- Durchführen einer modulierenden Steuerung der Strömungsgeschwindigkeit der Feuchtluft in der Brennkammer (38) und dem Kühlkanal (34), um die für die Prozessluft erforderliche Temperatur zu gewährleisten;
- Anpassen der Temperatur des Brenners (32) an derartige Werte, um eine vollständige Oxidation des Brennstoffs in der Brennkammer (38) und die Emission einer minimalen Menge an Schadstoffen und unverbrannten Stoffe zu ermöglichen; und
- Anpassen der Einführung einer Menge an Rezirkulationsluft in die Brennkammer (38) und den Kühlkanal (34), um die Zuführung von trockener Luft mit einer voreingestellten Temperatur an die Trocknervorrichtung (12) zu ermöglichen.

12. Verfahren nach Anspruch 11, ferner umfassend den Schritt des Haltens des Brennstoffs im Inneren der Brennkammer (38) für einen Zeitraum, der länger als eine Sekunde ist, so dass die Brennkammer (38) in einer Weise arbeitet, die der einer Verbrennungsanlage ähnlich ist und in jedem Fall die vollständige Oxidation des Brennstoffs in der Brennkammer (38) und die Emission einer minimalen Menge an Schadstoffen und unverbrannten Stoffen gewährleistet.

13. Verfahren nach Anspruch 11 oder 12, wobei der Brennstoff ausgewählt ist aus der Gruppe bestehend aus:
- Erdgas;
- LPG;
- Brennstoffe mit einem geringeren Wärmewert als Erdgas und LPG, erhalten aus Biomasse, festem Hausmüll oder Industrieabfall und eingespeist in Form von Gas und zerstäubter, flüssiger Form.

## Revendications

1. Système pour le séchage d'une feuille de papier de type voile, le système comprenant :
- au moins un dispositif de séchage (12) capable de souffler de l'air sec à haute température, délivré sous pression à travers un ou plusieurs conduits d'entrée (20), sur la feuille de papier de type voile, et d'aspirer à partir de ladite feuille de papier de type voile l'air humide, éjecté à travers un ou plusieurs conduits de sortie (22) connectés à un conduit de recirculation (26) ; et
- un système de combustion (10) qui comprend au moins un générateur de gaz chauds (14) du type appelé direct, équipé d'un système (16) d'alimentation en combustible et d'un système (18) d'alimentation en air de combustion,
dans lequel le générateur de gaz chauds (14) comprend un brûleur (32), connecté fonctionnellement au système (16) d'alimentation en combustible et au système (18) d'alimentation en air de combustion, et une chambre de combustion (38), le système étant **caractérisé en ce que** ladite chambre de combustion (38) est placée en communication de fluide directe avec le brûleur (32) en interposant un conduit de connexion (40), ladite chambre de combustion (38) étant configurée pour effectuer la fonction de confinement de la flamme qui se développe à travers ledit conduit de connexion (40) et pour maintenir - à l'intérieur - le mélange d'air et de gaz à une température prédéfinie pendant une période de temps nécessaire pour achever le processus de combustion, dans lequel, à l'extérieur de la chambre de combustion (38), est disposé au moins un canal de refroidissement (34) qui englobe ladite chambre de combustion (38), ledit canal de refroidissement (34) étant placé en aval dudit brûleur (32) et étant connectée fonctionnellement au conduit de recirculation (26), de manière que le générateur de gaz chauds (14) soit capable de générer un mélange d'air et de gaz brûlés qui forme ledit air sec, ainsi que de recevoir, à travers ledit conduit de recirculation (26), au moins une partie dudit air humide de manière qu'il puisse être chauffé et réutilisé par le dispositif de séchage (12), le générateur de gaz chauds (14) étant muni par ailleurs d'un orifice (48) placé en communication de fluide directe avec le canal de refroidissement (34) et avec la chambre de combustion (38), ledit orifice (48) étant muni d'une vanne (50) capable de commander la quantité d'air de recirculation à introduire dans la chambre de combustion (38), de sorte qu'il participe dans le processus de combustion avec sa propre quantité d'oxygène, et d'acheminer une partie dudit air de recirculation dans le canal de refroidissement (34), de manière qu'il soit acheminé dans les espaces intermédiaires (54) formés entre les parois extérieures de la chambre de combustion (38) et les parois intérieures du canal de refroidissement (34), de manière à refroidir ladite chambre de combustion (38).

2. Système selon la revendication 1, **caractérisé en ce que** le canal de refroidissement (34) est muni d'au moins un dispositif de détection de température (44) adapté pour contrôler la température du mélange d'air et de gaz brûlés, ledit dispositif de détection de température (44) étant capable de commander des moyens d'actionnement motorisés (52) de ladite vanne (50) de manière que la température du mélange d'air à acheminer vers le dispositif de séchage (12) puisse être réglée automatiquement en fonction de valeurs prédéfinies.

3. Système selon la revendication 2, **caractérisé en ce que** la chambre de combustion (38) est munie d'une sonde de température (56) qui, en intervenant sur l'actionnement du brûleur (32), maintient une température prédéfinie.

4. Système selon l'une quelconque des revendications 1 à 3, **caractérisé en ce que** le canal de refroidissement (34) est de forme cylindrique et il est muni d'un orifice de sortie (36) ayant une forme conique et convergente, c'est-à-dire avec un diamètre décroissant dans la direction de l'écoulement de fluide par rapport au diamètre moyen dudit canal de refroidissement (34), ledit orifice de sortie (36) étant placé en communication de fluide directe avec lesdits conduits d'entrée (20) pour l'air sec.

5. Système selon la revendication 4, **caractérisé en ce que** la chambre de combustion (38) est de forme sensiblement cylindrique et elle s'étend dans la même direction axiale d'extension que le canal de refroidissement (34).

6. Système selon la revendication 5, **caractérisé en ce que** la chambre de combustion (38) a une longueur dans la direction axiale sensiblement supérieure à la moitié de la longueur du canal de refroidissement (34), également mesurée dans la direction axiale.

7. Système selon l'une quelconque des revendications 4 à 6, **caractérisé en ce que** la chambre de combustion (38) est munie, à une extrémité terminale avant de celle-ci, d'une buse de transport (42) avec une section convergente faisant face à l'orifice de sortie (36) du canal de refroidissement (34).

8. Système selon l'une quelconque des revendications précédentes, **caractérisé en ce que** le canal de refroidissement (34) est configuré de manière à s'envelopper au moins partiellement autour de l'extrémité terminale arrière ou « base » (58) de la chambre de combustion (38), qui connecte ladite chambre de combustion (38) au conduit de connexion (40), de manière à améliorer la capacité de refroidissement des parois de ladite extrémité terminale arrière ou « base » (58) de la chambre de combustion (38).

9. Système selon l'une quelconque des revendications précédentes, **caractérisé en ce qu'**à la fois la chambre de combustion (38) et le conduit de connexion correspondant (40) sont réalisés avec un matériau réfractaire.

10. Système selon l'une quelconque des revendications précédentes, comprenant en outre un échangeur de chaleur air/air (30) agencé au niveau desdits conduits de sortie (22) pour l'air humide, ledit échangeur de chaleur air/air (30) récupérant une partie de la chaleur dudit air humide pour la transférer dans l'air de combustion acheminé vers le générateur de gaz chauds (14) à travers le système respectif (18) d'alimentation en air de combustion.

11. Procédé pour chauffer l'air de traitement dans un système pour le séchage d'une feuille de papier de type voile selon l'une quelconque des revendications 1 à 10, le procédé étant **caractérisé en ce qu'**il comprend les étapes suivantes :
- l'exécution d'une commande de modulation de la température dans la chambre de combustion (38) ;
- l'exécution d'une commande de modulation du débit d'air humide dans la chambre de combustion (38) et le canal de refroidissement (34) pour garantir la température nécessaire pour l'air de procédé ;
- le réglage de la température du brûleur (32) sur des valeurs susceptibles de permettre l'oxydation complète du combustible dans la chambre de combustion (38) et l'émission d'une quantité minimale de polluants et de substances non brûlées ; et
- le réglage de l'introduction dans la chambre de combustion (38) et dans le canal de refroidissement (34) d'une quantité d'air de recirculation susceptible de permettre l'acheminement d'air sec à une température prédéfinie vers le dispositif de séchage (12).

12. Procédé selon la revendication 11, comprenant en outre l'étape de maintien du combustible à l'intérieur de la chambre de combustion (38) pendant une période de temps qui est supérieure à une seconde, de manière que ladite chambre de combustion (38) fonctionne d'une manière qui est similaire à celle d'un incinérateur et en garantissant dans tous les cas l'oxydation complète du combustible dans ladite chambre de combustion (38) et l'émission d'une quantité minimale de polluants et de substances non brûlées.

13. Procédé selon la revendication 11 ou 12, dans lequel le combustible est sélectionné à partir du groupe composé de :
- gaz naturel ;
- GPL ;
- combustibles avec un pouvoir calorifique inférieur au gaz naturel et au GPL, obtenus à partir de la biomasse, à partir de déchets solides municipaux ou de déchets industriels et délivrés sous la forme de gaz et sous la forme de liquide nébulisé.
